(19) **Europäisches Patentamt**

**European Patent Office**

**Office européen des brevets**

(11) **EP 1 279 461 A2**

(12) **EUROPÄISCHE PATENTANMELDUNG**

(43) Veröffentlichungstag:
  **29.01.2003 Patentblatt 2003/05**

(51) Int Cl.7: **B23K 35/38**, B23K 26/12

(21) Anmeldenummer: **02015116.3**

(22) Anmeldetag: **05.07.2002**

(84) Benannte Vertragsstaaten:
  **AT BE BG CH CY CZ DE DK EE ES FI FR GB GR
  IE IT LI LU MC NL PT SE SK TR**
  Benannte Erstreckungsstaaten:
  **AL LT LV MK RO SI**

(30) Priorität: **24.07.2001 DE 10135878**

(71) Anmelder: **Linde Aktiengesellschaft
  65189 Wiesbaden (DE)**

(72) Erfinder: **Herrmann, Johann
  85716 Unterschleissheim (DE)**

(54) **Verfahren und Prozessgas zur Laser-Materialbearbeitung**

(57)  Die Erfindung betrifft ein Prozessgas und ein Verfahren zur Laser-Materialbearbeitung, insbesondere zum Laserschweißen, mit niedriger Energiedichte an der Bearbeitungsstelle. Um die Bearbeitungsgeschwindigkeit zu erhöhen wird die Fließfähigkeit des geschmolzenen Materials mit Hilfe eines geeigneten Prozessgases erhöht. Dazu ist Sauerstoff und/oder Kohlendioxid Bestandteil dieses Prozessgases.

EP 1 279 461 A2

**Beschreibung**

Die Erfindung betrifft ein Prozessgas und ein Verfahren zur Laser-Materialbearbeitung. Bei den Verfahren handelt es sich hauptsächlich um das Laserschweißen, das Laser-Hybrid-Schweißen, das Umschmelzen von Oberflächen, das Legieren von Oberflächen, das Auflegieren einer Oberfläche mit Zusatzmaterial oder das Beschichten einer Oberfläche und alle anderen Verfahren der Lasermaterialbearbeitung. Die hier gemeinten Verfahren zeichnen sich dadurch aus, dass bei der Bearbeitung Material aufgeschmolzen, nicht jedoch abgetragen, wird. Laserschweißen ist von den genannten Materialbearbeitungsverfahren die umfassende Bearbeitungsart und schließt als Bezeichnung die anderen Bearbeitungsverfahren im folgendem mit ein.

Das Laser-Schweißen bietet im Vergleich zu konventionellen Schweißverfahren (MAG, WIG) gezieltere Wärmeeinbringung, geringeren Verzug und höhere Schweißgeschwindigkeit. Ein Großteil der Laserschweißungen kommt ohne Zusatzmaterial aus. Dieses kann jedoch aus Gründen der Spaltüberbrückbarkeit oder der Metallurgie notwendig werden. Laserschweißen lassen sich beispielsweise Stähle, Leichtmetalle und thermoplastische Kunststoffe.

In der Laser-Materialbearbeitung sind mehrere unterschiedliche Lasertypen zum Schweißen üblich: der $CO_2$-Laser, der Nd:YAG-Laser und der Diodenlaser. Weitere Laserarten werden in bestimmten Bereichen eingesetzt und es sind auch noch andere Laser in der Zukunft denkbar. Die drei oben genannten Laserarten sind aber heute am weitesten verbreitet und haben eine hohe Entwicklungsstufe erreicht. Die Hauptanwendungsgebiete des Nd:YAG-Lasers liegen in der Feinwerktechnik und in der Elektroindustrie. Üblich sind dabei Laserleistungen bis 4 kW. Der Diodenlaser ist im Vergleich zu den beiden anderen Laserarten sehr jung. Die erzeugten Energiedichten und Temperaturen sind noch geringer als beim Nd:YAG-Laser. Das Entwicklungspotential ist in diesem Fall aber sicher noch lange nicht ausgeschöpft, so dass aufgrund der schon heute erreichten Werte von einem sehr großen Potential ausgegangen werden muss.

Die Lasertypen unterscheiden sich unter anderem in der erzeugten Wellenlänge, der Laserleistung sowie in der Energiedichte, die im Bearbeitungspunkt erreicht werden kann. Die Energiedichte ist die Energie der Laserstrahlung bezogen auf die Fläche, die der Laserstrahl ausleuchtet. Der $CO_2$-Laser erreicht bei den Lasern für die Materialbearbeitung im Dauerstrichbetrieb von allen Lasem die größten Energiedichten, der Nd:YAG-Laser und der Diodenlaser haben deutlich geringere Energiedichten. Da die Energiedichte proportional zum Quotienten aus Laserenergie und Brennfleckgröße ist, nimmt die Energiedichte zu, wenn der Laserstrahl auf eine kleinere Fläche fokussiert wird. Die Energiedichte hängt folglich nicht nur vom Lasertyp ab, sondern auch von der Strahlqualität, der Energieverteilung im Strahl, sowie den optischen Komponenten und der Justage.

Der Laserstrahl erzeugt im Material eine Dampfkapillare. Über diese gelangt die Laserenergie in die Tiefe des Materials. Dadurch können wesentlich schlankere und schnellere Schweißnähte erzeugt werden, als dies über eine Wärmeleitung des festen Materials von der Oberfläche in die Tiefe möglich wäre. Bei der Erzeugung dieser Dampfkapillare, welche auch Keyhole genannt wird, strömt sehr heißer, verdampfter, teilweise sogar ionisierter Werkstoff dem Laserstrahl entgegen. Alle Arten an gasförmigen Teilchen, die den Laserstrahl durchqueren, wechselwirken mit diesem. Dies gilt sowohl für die Bestandteile der Luft als auch für ein verwendetes Prozess- oder Schutzgas. Um nun eine Schweißnaht entstehen zu lassen, fließt geschmolzenes Material um das Keyhole und bildet dahinter die Schweißnaht. Je zügiger dies abläuft, desto schneller kann die Material-Bearbeitung fortschreiten.

Bei hohen Energiedichten im Bereich der Bearbeitungsstelle entsteht ein Plasma von solch hoher Temperatur, dass aufgrund der Absorption des Plasmas aus der Laserenergie der Schweißprozess zum Erliegen kommt. Bei niedrigeren Energiedichten, wie sie der Nd:YAG-Laser und die Diodenlaser aufweisen, werden jedoch nur geringere Temperaturen im austretenden Material erreicht und es entsteht ein Metalldampf - Plasma Gemisch mit deutlich niedrigeren Temperaturen und geringem Plasmaanteil. Dieses Gemisch kann der Laserstrahl durchdringen; der Schweißprozess bricht nicht ab. Folglich ist für die Laser-Materialbearbeitung mit niedrigen Energiedichten ein Prozessgas nicht zwingend notwendig. Es zeigt sich aber, daß, auch wenn es zu keinem Abbruch des Schweißprozesses kommt, der Schweißprozess negativ beeinflußt und verlangsamt wird. Bei der Verwendung von Prozessgasen liefert der Schweißprozess in aller Regel wesentlich bessere und konstantere Ergebnisse. Wird darüberhinaus ein für eine spezielle Anwendung optimiertes Prozessgas eingesetzt, so kann der Schweißprozess sogar beschleunigt werden.

Der Erfindung liegt daher die Aufgabe zugrunde, ein Prozessgas für Laserbearbeitungsverfahren mit niedrigen Energiedichten anzugeben, welches hohe Arbeits- bzw. Schweißgeschwindigkeiten mit stabilem Schweißprozess ermöglicht. Die Erfindung richtet sich insbesondere auf das Laserschweißen mit relativ niedrigen Energiedichten im Bereich der Bearbeitung, wie sie beim Laserschweißen mit Nd:YAG-Lasern, Diodenlasern oder bei auf große Brennpunkte fokussierten $CO_2$-Lasem vorliegen.

Diese Aufgabe wird dadurch gelöst, dass das Prozessgas Sauerstoff und/oder Kohlendioxid enthält. Der Anteil von Sauerstoff und/oder Kohlendioxid ist durch den Wert der $O_2$-Wirksumme festgelegt. Die $O_2$-Wirksumme z ergibt sich aus der gewichteten Summe der Volumenanteile von Sauerstoff und Kohlendioxid nach der Formel

$$z = 1 * [\text{Anteil des } O_2 \text{ in Vol.-\%}] + \tfrac{1}{2} * [\text{Anteil des } CO_2 \text{ in Vol.-\%}].$$

Der Wert für die $O_2$-Wirksumme liegt für das erfindungsgemäße Prozessgas zwischen 25 und 100. Gegebenenfalls, d.h. wenn sich die Volumenanteile von Sauerstoff und Kohlendioxid nicht zu 100 % ergänzen, enthält das Prozessgas im verbleibendem Volumen Stickstoff oder Argon oder ein Gemisch dieser beiden Komponenten. Die Anteile des Prozessgases sind immer in Volumenprozent unter Normalbedingungen angegeben. Um die Berechnung der $O_2$-Wirksumme zu verdeutlichen, folgt nun eine Beispielrechnung. Für ein Prozessgas aus 60 % $O_2$ und 10 % $CO_2$ und 30 % Ar ergibt sich eine $O_2$-Wirksumme von 60 % $O_2$ + ½ 10 % $CO_2 \rightarrow$ 60 + 5 = 65.

Bei dem erfindungsgemäßen Prozessgas ist zu beachten, dass der Kohlendioxid- und der Sauerstoffanteil als gemeinsame $O_2$-Wirksumme definiert sind. Dies hat zur Folge, dass, wenn der Volumenanteil an Kohlendioxid reduziert wird, der Volumenanteil an Sauerstoff entsprechend der Formel für die $O_2$-Wirksumme erhöht werden muss, um dieselbe $O_2$-Wirksumme zu erhalten, und umgekehrt. Wesentlich für die Erfindung ist, dass die $O_2$-Wirksumme entsprechend den Bedingungen gewählt wird. Unterschiedliche Eigenschaften, welche Kohlendioxid und Sauerstoff im Vergleich zueinander aufweisen, spielen im Bezug auf das erfindungsgemäße Prozessgas nur eine untergeordnete Rolle.

Mit dem erfindungsgemäßen Prozessgas kann die Schweißgeschwindigkeit deutlich gesteigert werden. Aufgrund der so erhaltenen Produktivitätssteigerung rechtfertigt sich der Einsatz des erfindungsgemäßen Prozessgases auch wirtschaftlich. Das erfindungsgemäße Prozessgas ermöglicht die Erhöhung der Schweißgeschwindigkeit dadurch, dass die Fließfähigkeit der Schmelze verbessert wird. Je dünnflüssiger die erzeugte Schmelze am Bearbeitungspunkt ist, desto schneller läuft die Schmelze um das Keyhole, schließt dieses und die Schweißnaht kann weitergeführt werden. Aufgrund dieses Effekts kann die Schweißgeschwindigkeit um bis zu 30% im Vergleich zum Schweißen ohne Prozessgas gesteigert werden. Anteile von Stickstoff und/oder Argon im Prozessgas führen dazu, dass die Schmelze weniger dünnflüssig wird, was das Abtropfen von geschmolzenem Material verhindert. Ein weiterer Effekt des erfindungsgemäßen Prozessgases besteht auch darin, dass die Stabilität des Bearbeitungsprozesses verbessert wird. Nur ein stabil ablaufender Prozess garantiert eine hohe Qualität der Schweißung.

Mit besonderem Vorteil enthält das Prozessgas Sauerstoff und/oder Kohlendioxid in solchen Anteilen, dass die $O_2$-Wirksumme eine Wert ereicht, der zwischen 30 und 99, vorzugsweise zwischen 35 und 95, liegt.

Besonders bevorzugt liegt der Wert für die $O_2$-Wirksumme zwischen 60 und 90.

Die vorliegende Erfindung betrifft auch ein Verfahren zur Laser-Materialbearbeitung, insbesondere zum Laserschweißen, mit niedriger Energiedichte, wobei ein Prozessgas wie oben beschrieben verwendet wird. Damit steht ein Verfahren zur Laser-Materialbearbeitung zur Verfügung, das aufgrund seiner Schnelligkeit und Stabilität eine besonders hohe Produktivität ergibt.

Das erfindungsgemäße Prozessgas findet Verwendung bei der Laser-Materialbearbeitung, insbesondere beim Laserschweißen, von Eisenwerkstoffen. Das erfindungsgemäße Prozessgas zeigt seine Vorteile vor allem bei den Eisenbasiswerkstoffe. Eisenbasiswerkstoffe zeichnen sich dadurch aus, dass Eisen als größter Legierungsanteil enthalten ist. Auch bei Stählen, welche ja zu den Eisenwerkstoffen gehören, zeigen sich die besondem Vorteile des Prozessgases. Aber auch bei Eisenwerkstoffe mit geringerem Eisenanteil findet das Prozessgas Einsatz.

Im folgendem wird die Erfindung anhand von Ausführungsbeispielen näher erläutert.

Bei der Verwendung eines Gemisches von 50 % Sauerstoff und 50 % Kohlendioxid ergibt sich beim Schweißen von 1,2 mm Blechen eine Geschwindigkeitserhöhung von 20 % verglichen mit einem Schweißvorgang ohne Prozessgas, wobei sich der Schweißprozess durch hohe Stabilität auszeichnet. Die $O_2$-Wirksumme dieses Prozessgases hat den Wert 75 und ergibt sich folgendermaßen:

$$50 \% \ O_2 + \tfrac{1}{2} * 50 \%$$

$$CO_2 \rightarrow 50 + 25 = 75.$$

Wird reiner Sauerstoff verwendet ($O_2$-Wirksumme von 100), lässt sich eine Schweißgeschwindigkeitssteigerung bis zu 30 % ereichen. Da in diesem Fall jedoch die Schmelze sehr dünnflüssig wird und bei großen Spaltbreiten zu tropfen beginnt, sind in aller Regel Mischungen vorteilhafter, denen Gase zugesetzt sind, die sich inert verhalten.

Beispielsweise lassen sich mit einer Mischung aus 40 % Sauerstoff, 20 % Kohlendioxid und 40 % Argon ebenfalls deutliche Geschwindigkeitssteigerungen erzielen. Argon reduziert hier die Fließfähigkeit der Schmelze und stellt u.U. die Anwendbarkeit für spezielle Schweißaufgaben her. Die $O_2$-Wirksumme dieses Prozessgases liegt bei 50.

Die erfindungsgemäßen kostengünstigen Prozessgase schaffen Verbesserungen bei der Laser-Materialbearbeitung mit niedrigen Energiedichten, die in einer verbesserten Wirtschaftlichkeit bekannter Prozesse mündet.

**Patentansprüche**

1.  Prozessgas zur Laser-Materialbearbeitung, insbesondere zum Laserschweißen, mit niedriger Energiedichte an der Bearbeitungsstelle, **dadurch gekennzeichnet, dass** das Prozessgas Sauerstoff und/oder Kohlendioxid enthält und die $O_2$-Wirksumme z des Prozessgases einen Wert zwischen 25 und 100 annimmt, wobei z = 1 * [Anteil des $O_2$ in Vol.-%] + ½ * [Anteil des $CO_2$ in Vol.-%], und der gegebenenfalls verbleibende Volumenanteil Stickstoff und/oder Argon enthält.

2.  Prozessgas nach Anspruch 1, **dadurch gekennzeichnet, dass** der Wert für die $O_2$-Wirksumme zwischen 30 und 99, vorzugsweise zwischen 35 und 95, liegt.

3.  Prozessgas nach Anspruch 1 oder 2, **dadurch gekennzeichnet dass** der Wert für die $O_2$-Wirksumme zwischen 60 und 90 liegt.

4.  Verfahren zur Laser-Materialbearbeitung, insbesondere zum Laserschweißen, mit niedriger Energiedichte an der Bearbeitungsstelle, **dadurch gekennzeichnet, dass** ein Prozessgas nach einem der Ansprüche 1 bis 3 verwendet wird.

5.  Verwendung eines Prozessgases nach einem der Ansprüche 1 bis 3 zur Laser-Materialbearbeitung von Eisenwerkstoffen, insbesondere zum Laserschweißen von Eisenwerkstoffen.